# EUROPEAN PATENT SPECIFICATION

(11) **EP 2 978 877 B1**
(45) Date of publication and mention of the grant of the patent: **23.09.2020**
(21) Application number: 14713141.1
(22) Date of filing: 28.03.2014
(51) Int. Cl.: C25D 3/56, C25D 5/12

(54) **ELECTROPLATING BATH FOR ZINC-IRON ALLOYS, METHOD FOR DEPOSITING ZINC-IRON ALLOY ON A DEVICE AND SUCH A DEVICE**
GALVANISIERUNGSBAD FÜR ZINK-EISEN-LEGIERUNGEN, VERFAHREN ZUR ABSCHEIDUNG VON ZINK-EISEN-LEGIERUNGEN AUF EINER VORRICHTUNG SOWIE SOLCH EINE VORRICHTUNG
BAIN D'ELECTROPLACAGE POUR DES ALLIAGES ZINC-FER, PROCEDE DE DEPOT D'ALLIAGE ZINC-FER SUR UN DISPOSITIF ET UN TEL DISPOSITIF

(30) Priority: 28.03.2013 EP 13161725
(43) Date of publication of application: 03.02.2016
(73) Proprietor: Coventya SAS, 92396 Villeneuve-la-Garenne Cedex (FR); University of Besançon, 25030 Besançon (FR)
(72) Inventor: DELOYE, Fanny, 92390 Villeneuve-la-Garenne (FR); GIGANDET, Marie-Pierre, 25230 Seloncourt (FR); THIERY, Lionel, 92110 Clichy (FR); HIHN, Jean-Yves, 25770 Serre Les Sapins (FR); POMMIER, Nicolas, 92600 Asnieres-sur-seine (FR); COLL, Yoann, 92110 Clichy (FR); LALLEMAND, Fabrice, 70190 Bussieres (FR)
(74) Representative: Pfenning, Meinig & Partner mbB
(86) International application number: PCT/EP2014/056339
(87) International publication number: WO 2014/154884

(56) References cited:
- EP-A2- 0 531 015
- WO-A1-2012/110304
- GB-A- 2 155 493
- US-A- 5 630 929
- NARASIMHAMURTHY V ET AL: "Electrodeposition of Zinc-Iron from an Alkaline Sulfate Bath Containing Triethanolamine", METAL FINISHING, ELSEVIER, NEW YORK, NY, US, vol. 95, no. 9, 1 September 1997 (1997-09-01), pages 44-47, XP004092423, ISSN: 0026-0576, DOI: 10.1016/S0026-0576(97)85858-8

## Description

The present invention relates to an electroplating bath for zinc-iron alloys as an anti-corrosive layer and to a method for depositing zinc-iron alloy on a device. The invention also relates to a device which comprises an anti-corrosive layer of a zinc-iron alloy and the use of mentioned electroplating bath.

The Zinc/Nickel alloy with a percentage of Nickel comprised between 12 and 15% is largely used for the sacrificial protection of steel against corrosion. It offers several advantages versus pure Zinc. Its corrosion potential is close to the one of iron and consequently offers a slower corrosion rate compared to pure Zinc. Its anti corrosion properties are then higher than pure Zinc.

The automotive industry has qualified this alloy for several applications and especially for the protection against corrosion on fasteners and small parts submitted to high corrosive environment.

Nickel salts are CMR cat 1A, there has been a proposal from France to include them in the so called candidate list of substances of very high concern (SVHC) according to REACH regulation n° 1907/2006.

This proposal was not adopted by the commission so far, but there is high risk that Ni salts will be proposed again in the next future.

There is consequently a need for finding a substitute to Zinc/Nickel alloy that offers comparable performances and with no impact on the health and safety of workers and environment.

There are not many elements to be alloyed with Zinc in order to bring its corrosion potential close to the one of iron (- 0.44 V/SHE : Standard Hydrogen Electrode).

Tin is a potential candidate but its cost is quite prohibitive for this type of protection as the Tin/Zinc alloys contain up to 70% Sn. In addition, conversion layers free of CrVI are not very effective for this alloy.

Iron is the metal of choice as its alloy with Zinc will always remain sacrificial versus steel.

Zinc/Iron electrodeposited alloys exist for many years. In 1995, W Eckles in US 5,405,523 disclosed the electrodeposition of zinc alloyed with metal ions of elements from the first transition of the periodic table, the bath comprising a ureylene quaternary ammonium polymer as brightening agent. The resulting deposits contain generally between 0.1 and 1% by weight of the alloying element.

US 4,740,278 & US 4,746,411 from Electrobrite mention the obtention of deposits containing up to 20% Fe but in acidic media.

US 4,444,629 from OMI shows how to obtain a 32% Fe containing deposit but also in acidic media

US 4,541,903 from Kawasaki Steel and EP 0,546,914 from SOLLAC also show deposits with high iron content but also in acidic media and for high current densities since the application is for coil coating.

The drawbacks associated with acidic electrolytes are well known, the metallic distribution on the parts to be plated is very poor compared to an alkaline electrolyte. On complicated items like fasteners, there are major risks to have very low thicknesses in the recessed areas of low current densities causing early corrosion (i.e. in threads of a screw). The high current densities areas show on the contrary high thicknesses. The global quantity of zinc alloy deposited on the parts is then higher with an acidic electrolyte.

Finally WO 2012/110304 from Atotech discloses a zinc iron layer material in which they claim a 12 to 20% Fe layer with a defined gamma phase and 330 texture, only this particular alloy is able to provide a deposit with high corrosion resistance, high hardness and bright aspect.

The objective of the present invention is to provide a deposit of zinc and iron providing a high corrosion resistance superior to the one of pure Zn and comparable to the one of Zn/Ni used as a reference. The excellent anticorrosion properties are additionally obtained in combining the deposit of the invention with CrIII conversion layers that are free of Cobalt ions. The present invention also describes the alkaline electrolyte to be used to obtain such a deposit. This electrolyte offers the advantage versus other solutions to be completely free of any carboxylic acids.

This objective is solved by the electroplating bath for zinc-iron alloys with the features of claim 1, the method for depositing zinc-iron alloy on a device with the features of claim 6 and the device of claim 7. In claim 13 inventive use of the electroplating bath is mentioned. The further dependent claims describe preferred embodiments.

According to the present invention, an electroplating bath for zinc-iron alloys is provided which comprises:
a) from 4 to 20 g/L of zinc ions,
b) from 1 to 10 g/L of a iron ions,
c) from 20 to 150 g/L of sodium hydroxide and/or potassium hydroxide,
d) from 0,02 to 1 g/L of a quaternary ammonium polymer as defined in claim 1, and
e) at least one complexing agent selected from the group consisting of amines, polyols or mixtures thereof, wherein carboxylic or hydrocarboxylic acids are avoided in the electroplating bath.

The present invention aims to develop a sacrificial deposit of Zinc alloyed with iron, in order to protect steel against corrosion, the deposit being made from an alkaline electrolyte. It was shown that high percentages of iron enable to increase the potential of the zinc layer and bring it closer to the corrosion potential of steel. Zn/Fe with high percentages of iron show anti corrosion behaviour comparable to the one of Zn/Ni alloys with percentages of Nickel comprised between 12 and 15%.

The electrolyte used to produce Zn/Fe deposits with high Fe content is of alkaline pH. The electrolytes of alkaline pH in opposition to the acidic electrolytes favour the metallic distribution on the plated parts.

Preferably, zinc is introduced in the plating bath as zincate ion. The Zn concentration is adjusted between 4 and 20 g/L, preferably between 6 and 10 g/L. The sodium hydroxide concentration is adjusted between 20 and 150 g/L and more preferably between 30 and 120 g/L.

Iron is introduced as ferrous or ferric salt, more preferably is the use of ferric salt like ferric Sulphate, ferric Chloride, ferric Oxide, ferric Nitrate.

Ferrous or ferric ions have to complexed with appropriate complexing agents to be maintained in solution at very alkaline pH (> 14). Amongst the various complexing agents, amines are the preferred ones and especially alkanolamines like MEA, DEA, TEA or N,N,N',N'-tetrakis-(2-hydroxypropyl)-ethylenediamine. Polyols like sorbitol, mannitol can also be used as complexing agents for iron as well as mixtures of polyols and amines.

Carboxylic or hydroxycarboxylic acids and their salts like sodium gluconate or sodium citrate are avoided as they can create breakdown products detrimental for the efficiency of the plating bath.

The respective quantities of iron and complexing agents are varied in order to obtain a deposit containing various percentages of iron.

The bath of the invention further contains quaternary ammonium polymers, as defined in claim 1, added in order to obtain homogeneous deposits in terms of aspect and metallic distribution. Those polymers comprising linear or cyclic, saturated or unsaturated alkyl amine monomers are described in US 7,640,083 B2 and US 5,435,898 A. An example of such an additive is Mirapol WT from Rhodia. The quantity of this additive is ranging between 20 and 1000 ppm.

In a preferred embodiment, the electroplating bath further comprises polyvinyl alcohol, 1,4 butynediol, disodium 2,5-dimercapto-1,3,4thiadiazole, nicotinic acid, N-benzyl-pyridiniumcarboxylate, N-methyl-pyridiniumcarboxylate, Imidazole/ Epichlorohydrine reaction products, alanine, triethanolamine, sodium propargyl sulphonate, 1-(3-sulfopropyl)pyridinium betain, aldehydes like veratraldehyde, anisaldehyde, vaniline or combinations thereof. Moreover, a method for depositing zinc-iron alloy on a device is provided using the electroplating bath which is described above.

Moreover, a device comprising an anti-corrosive layer of zinc-iron alloy is provided wherein the layer has a content of iron of 7 to less than 28 wt.-% and the zinc- iron comprises at least two of crystalline structures selected from the cubic, the monoclinic and the hexagonal crystalline structure of Zn/Fe.

The crystalline structures are preferably selected from the phases ξ, δ1, η,Γ1 and Γ and combinations thereof.

The layer has preferably a thickness of 0,5 to 50 µm, more preferably 3 to 20 µm.

In a preferred embodiment, the layer has a content of iron of more than 20 wt.-%, more preferably 21 to 28 wt.-%.

In a further preferred embodiment, the layer has a content of iron of less than 12 wt.-%, more preferably 7 to 12 wt.-%.

The device is preferably producible by the above mentioned method.

The present invention is described in more detail according to the following figures and examples without limiting the invention to these specific embodiments.
Fig. 1 shows a diagram with chronopotentium metric codes of different Zn/Fe alloys in NaCl 5 %.

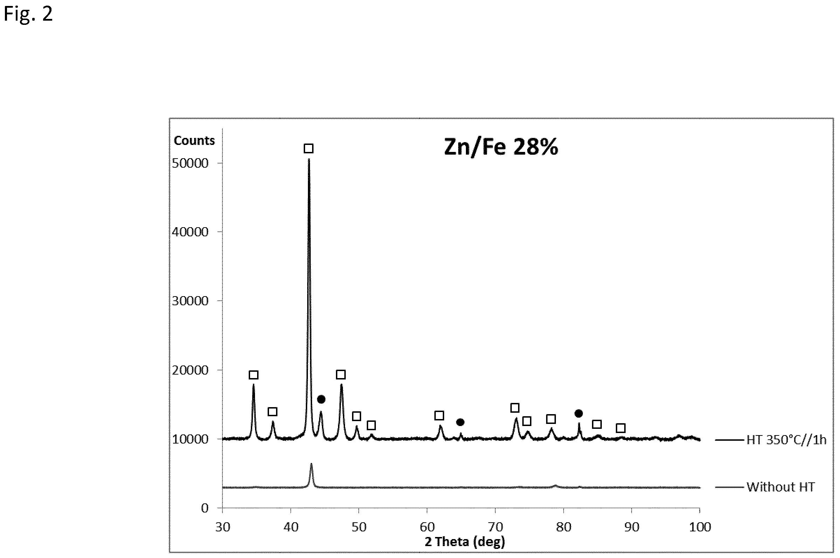

Fig. 2 shows a XRD structure of Zn/Fe alloys containing 28 % Fe in the deposit.
Fig. 3 shows a XRD structure of Zn/Fe alloys containing 17 % Fe in the deposit.

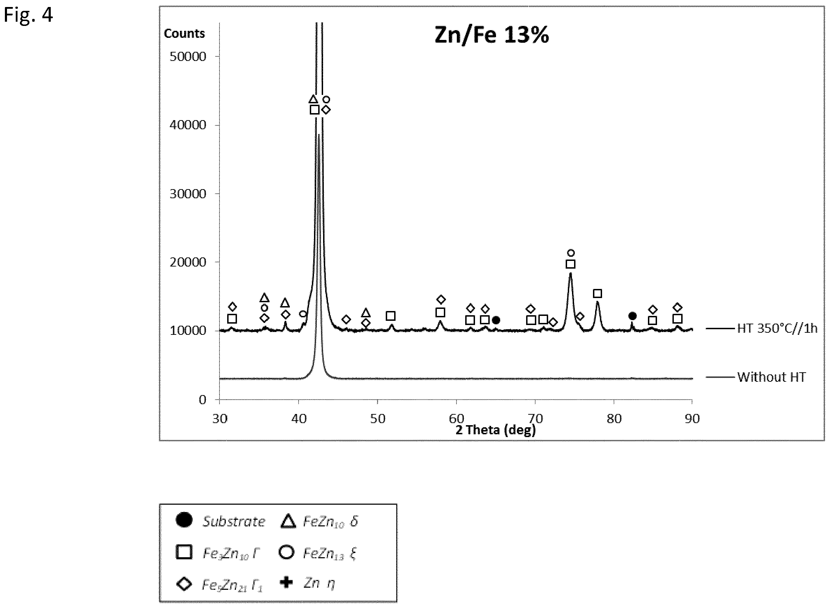

Fig. 4 shows a XRD structure of Zn/Fe alloys containing 13 % Fe in the deposit.

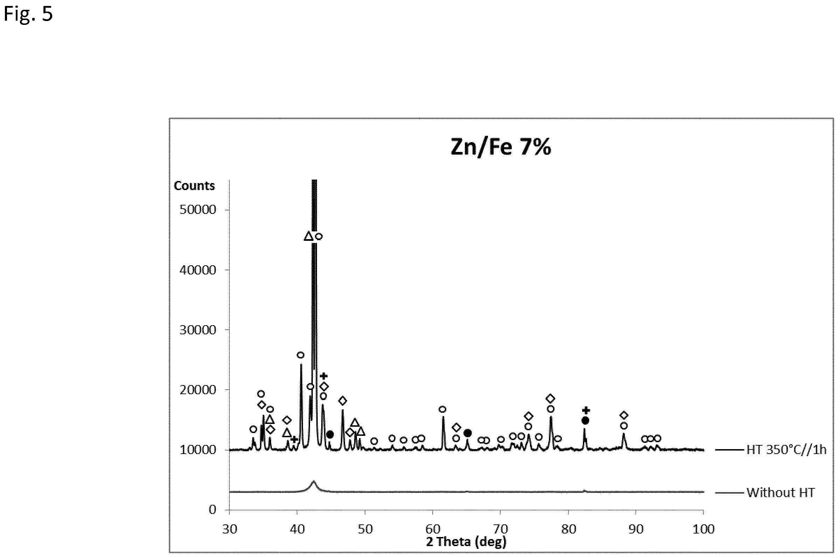

Fig. 5 shows a XRD structure of Zn/Fe alloys containing 7 % Fe in the deposit.

The following examples of electrolytes which lead to the deposition of zinc-iron deposit with a high content of iron are shown in table 1.

**Table 1**

| Example | 1 | 2 | 3 | 4 |
|---|---|---|---|---|
| Components NaOH g/L | 80 | 80 | 80 | 80 |
| Zinc g/L | 8,125 | 8,125 | 8,125 | 8,125 |
| Complexing agent g/L | 74,6 | 74,6 | 74,6 | 74,6 |
| Mirapol WT g/L | 0,2 | 0,2 | 0,2 | 0,2 |
| Iron deposited | 7 % | 13 % | 17% | 28 % |

The main advantage associated with the deposition of high Fe Zn/Fe alloys consists in an increase of anticorrosion behaviour compared to pure Zn as well as the possibility to obtain comparable performances to Zn/Ni alloys.

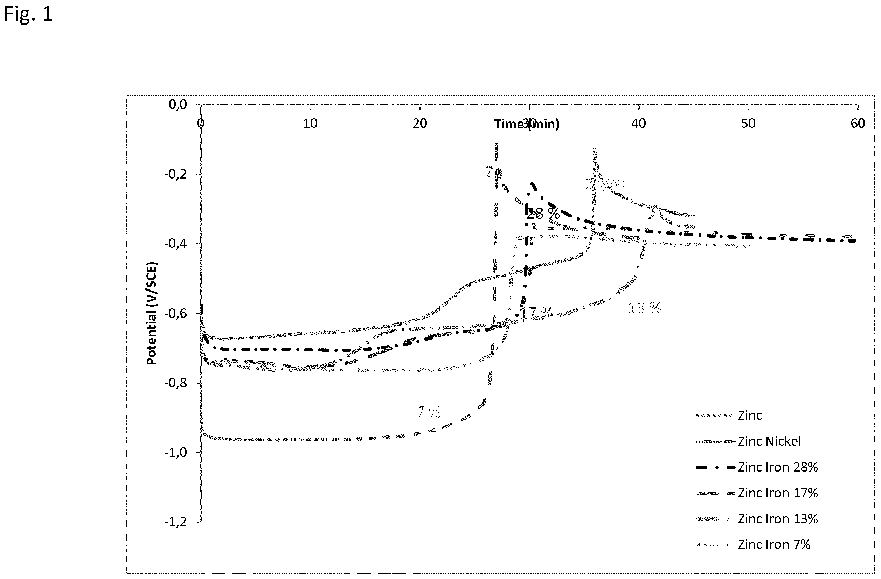

Fig. 1 shows the chronopotentiometric curves of different Zn/Fe alloys (without passivation) for different percentages of Fe at same thickness (10 +/- 1 µm) when submitted to a corrosive environment (NaCl 50 g/L in water). After an open circuit potential measurement during 5 minutes to stabilize the potential, a current of 10 mA/cm² is applied to the system. The curve representing a 7% Fe deposit shows that the starting potential of the deposit increased by 200 mV compared to pure Zn : from - 0.95 V to - 0.75 V. It is also obvious to see that all the Zn/Fe alloys considered are corroded after a longer time than pure Zn, ie from 29 to 41 min versus 27 min for pure Zn for the same deposit thickness.

It is also totally unpredictable to see that Zn/Fe alloy with 13% Fe showed an even longer time before corrosion compared to Zn/Ni that is considered as a reference in terms of anticorrosion properties.

It is then obvious from Fig. 1 that Zn/Fe alloys with high iron percentages offer a real improvement versus pure Zn deposits and also an effective alternative versus Zn/Ni deposits with high Ni percentage.

### Diffraction diagrams

The phase structures of the Zn/Fe deposits were determined by X-ray diffraction (XRD) equipped with a copper tube CuKα. 2θ scans were performed between 30 to 100°. The table n°2 shows Zn/Fe phase characteristics expected (s. table 2).

**Table 2**

| **Phases** | **Formula** | **Crystal structure** | **Space group** | **Predominating peak** | |
|---|---|---|---|---|---|
| | | | | **(*hkl*) plan** | **2Theta** |
| *α Fe* | Fe (Zn) | Body-centered cubic | Im-3m | (110) | 44,67° |
| *Γ* | Fe₃Zn₁₀ | Body-centered cubic | I-43m | (330) | 42,49° |
| *Γ₁* | Fe₁₁Zn₄₀ | Face-centered cubic | F-43m | (822) | 42,6° |
| *δ* | FeZn_{10,98} | Hexagonal | P6₃/mc | (330) | 42,27° |
| *ξ* | FeZn₁₃ | Base-centered monoclinic | C2/m | (131) | 41,54° |
| *η Zn* | Zn (Fe) | Hexagonal | hP2 | | |

To improve the crystallization's degree and clearly identify phases in the Zn/Fe alloys, a heat treatment (HT) was applied onto the alloy.

The superior anticorrosion behaviour of Zn/Fe deposits ranging from 7% Fe to < 28% Fe is linked to a crystallographic structure that was composed of a mixture or not of different phases : ξ, δ1, η, Γ1 and Γ, all providing a superior corrosion resistance to the alloy. When only the gamma phase was present in the alloy : i.e. for 28% Fe, the anticorrosion behaviour of the alloy was inferior.

### Salt Spray Test performance

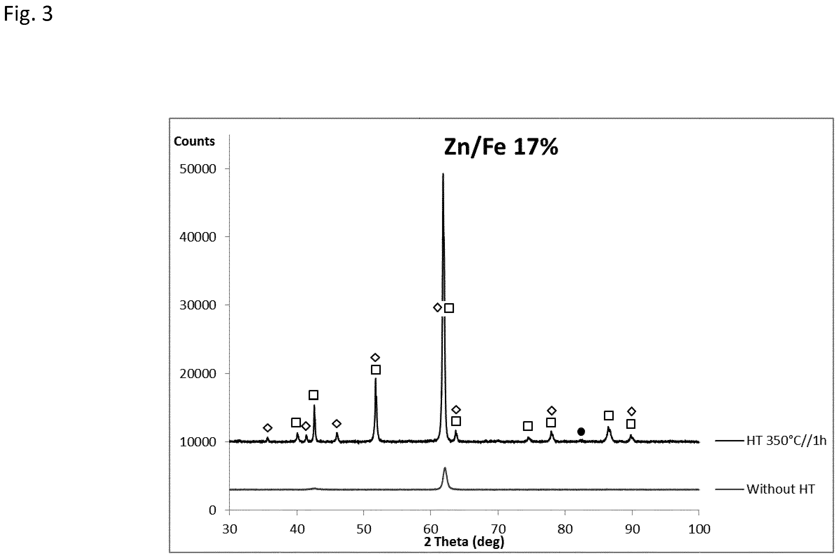

The alloys deposited showed homogeneous structure besides the alloy containing 28% Fe that was showing some hazy areas on the deposit(see Fig. 3).

The superior corrosion resistance of Zn/Fe alloyed deposits has to be evaluated according two parameters :
1. Their ability to delay the appearance of white rust corresponding to a cosmetic corrosion, ie the appearance of white salts corresponding to the corrosion of zinc.
2. The delay in the appearance of red rust corresponding to the corrosion of the steel substrate material.

The evaluation of corrosion resistance is evaluated thanks to different tests depending on the specifications of the OEM. The most used test is the Neutral Salt Spray Test performed according to ISO 9227.

The parts plated with Zn or Zn alloys are generally submitted to a conversion layer made from a Cr(III) conversion electrolyte. These conversion layers used to contain Cobalt as an additional element to reinforce resistance against corrosion. As Cobalt salts have been placed in the SVHC list under REACH regulation, it is required to find alternatives.

The applicant has developed such alternatives like Finidip 128 CF which is a Cobalt free conversion layer giving performances comparable to Cobalt containing conversion layers.

The various Zn/Fe deposits were then passivated with the Finidip 128 CF conversion solution according to the following sequence and tested in accelerated corrosion atmosphere, references were established with the highest anticorrosion conversion solution containing Cobalt: named Lanthane 315 on pure Zinc and Finidip 128 on Zn/Ni. Neutral salt spray test performances will be reported in the following examples.

### Operating sequence :

Galvanized steel panels (having a size of 100*70*0,25 mm³) are pickled in HCI 17% for 1 minute to remove the protective Zn layer, rinsed, electrolytically cleaned in Prelik 1000 at room temperature for 2 minutes under cathodic and 30 s anodic polarization at current density of 2 A/dm² and finally rinsed in a 2 stage cascade rinse. Next, a zinc/iron alloy layer was deposited from a plating baths discussed in the respective examples.

Then, the substrates were rinsed with water and a Cr³⁺ passivation layer was deposited onto zinc/iron alloy coating from a passivation bath Finidip 128 CF (Coventya) that is a Cr(III) based conversion layer and is free of Cobalt. The zinc/iron alloy layer was rinsed and drained.

Finally, a top-coat was deposited onto the zinc/iron deposits passivated from Finigard 150 and dried.

## Claims

1. Electroplating bath for zinc-iron alloys having an alkaline pH, comprising
a) from 4 to 20 g/L of zinc ions,
b) from 1 to 10 g/L of a iron ions,
c) from 20 to 150 g/L of sodium hydroxide and/or potassium hydroxide,
d) from 0,02 to 1 g/L of a quaternary ammonium polymer represented by the general formula I 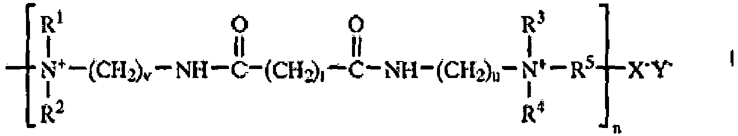 wherein
R¹, R², R³, R⁴ are the same or different and include: -CH₃, -CH₂CH₃,-CH(CH₃)₂, -CH₂CH₂OH; R⁵ is -CH₂CH₂-, -CH₂CH₂CH₂-,-CH₂CH₂CH₂CH₂-, -CH₂CHOHCH₂- or -CH₂CH₂OCH₂CH₂-;
X and Y can be the same or different anions and include: chlorine, bromine and iodine; wherein u, v and t can be the same or different and can vary from 1 to 7
or the cationic polyamine polymer is Poly(bis(2-chloroethyl)etheralt-1,3-bis[3-(dimethylamino)propyl]urea] quaternized
and
e) at least one complexing agent selected from the group consisting of amines, polyols or mixtures thereof,
wherein carboxylic or hydrocarboxylic acids are avoided in the electroplating bath.

2. Electroplating bath according to one of the preceding claims, **characterised in that** that the iron ion concentration is 1 to 5 g/L and/or the zinc ion concentration is 6 to 10 g/L in the electroplating bath.

3. Electroplating bath according to one of the preceding claims, **characterised in that** sodium hydroxide concentration is 30 to 120 g/L in the electroplating bath.

4. Electroplating bath according to one of the preceding claims, **characterised in that** the electroplating bath further comprises polyvinyl alcohol, 1,4 butynediol, disodium 2,5-dimercapto-1,3,4thiadiazole, nicotinic acid, N-benzyl-pyridiniumcarboxylate, N-methyl-pyridiniumcarboxylate, Imidazole/ Epichlorohydrine reaction products, alanine, triethanolamine, sodium propargyl sulphonate, 1-(3-sulfopropyl)pyridinium betain, aldehydes like veratraldehyde, anisaldehyde, vaniline or combinations thereof.

5. Electroplating bath according to one of the preceding claims, **characterised in that** the electroplating bath has a temperature of 15 °C to 45 °C, preferably 20 °C to 30 °C.

6. Method for depositing a zinc-iron alloy on a device, **characterised in that** the electroplating bath according to one of claims 1 to 5 is used and electroplating is carried out at a current density of 0,01 to 20 A/dm², preferably 1 to 3 A/dm² at a temperature of the electroplating bath of 15 °C to 45 °C, preferably 20 °C to 30 °C.

7. Device comprising an anti-corrosive layer of a zinc-iron alloy wherein the layer has a content of iron of 7 to less than 28 wt.-% and the zinc- iron comprises at least two of crystalline structures selected from the cubic, the monoclinic and the hexagonal crystalline structure of Zn/Fe.

8. Device according to claim 7,
**characterised in that** the crystalline structures are selected from the phases ξ, δ1, η, Γ1 and Γ and combinations thereof.

9. Device according to any of claims 7 or 8,
**characterised in that** the layer has a thickness of 0.5 to 50 µm, preferably 3 to 20 µm.

10. Device according to any of claims 7 to 9,
**characterized in that** the layer has a content of iron of more than 20 wt.-%, preferably 21 to 28 wt.-%.

11. Device according to any of claims 7 to 9,
**characterized in that** the layer has a content of iron of less than 12 wt.-%, preferably 7 to 12 wt.-%.

12. Device according to any of claims 7 to 11, producible by the method of claim 6.

13. Use of the electroplating bath according to one of claims 1 to 6 for protecting steel parts against corrosion.

## Patentansprüche

1. Galvanisierungsbad für Zink-Eisen-Legierungen, das einen alkalischen pH-Wert aufweist, enthaltend
a) von 4 bis 20 g/L Zinkionen,
b) von 1 bis 10 g/L Eisenionen,
c) von 20 bis 150 g/L Natriumhydroxid und/oder Kaliumhydroxid,
d) von 0,02 bis 1 g/L eines quaternären Ammoniumpolymers, dargestellt durch die allgemeine Formel I 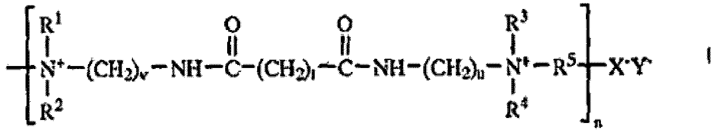 wobei
R¹, R², R³, R⁴ gleich oder verschieden sind und einschließen:-CH₃, -CH₂CH₃, -CH(CH₃)₂, -CH₂CH₂OH; R⁵ -CH₂CH₂-, -CH₂CH₂CH₂-,-CH₂CH₂CH₂CH₂-, -CH₂CHOHCH₂- oder -CH₂CH₂OCH₂CH₂-;
X und Y gleiche oder verschiedene Anionen sein können und einschließen: Chlor, Brom und Jod; wobei u, v und t gleich oder verschieden sein können und von 1 bis 7 variieren können
oder das kationische Polyamin-Polymer quaternärer Poly[bis(2-chlorethyl)ether-alt1,3-bis[3-(dimethylamino)propyl]harnstoff] ist
und
e) mindestens ein Komplexierungsmittel, ausgewählt aus der Gruppe bestehend aus Aminen, Polyolen oder Mischungen davon,
wobei Carbon- oder Hydrocarbonsäuren im Galvanisierungsbad vermieden werden.

2. Galvanisierungsbad nach einem der vorhergehenden Ansprüche,
**dadurch gekennzeichnet, dass** die Eisenionenkonzentration 1 bis 5 g/L und/oder die Zinkionenkonzentration 6 bis 10 g/L im Galvanisierungsbad beträgt.

3. Galvanisierungsbad nach einem der vorhergehenden Ansprüche,
**dadurch gekennzeichnet, dass** die Natriumhydroxidkonzentration 30 bis 120 g/L im Galvanisierungsbad beträgt.

4. Galvanisierungsbad nach einem der vorhergehenden Ansprüche,
**dadurch gekennzeichnet, dass** das Galvanisierungsbad ferner Polyvinylalkohol, 1,4-Butindiol, Dinatrium-2,5-dimercapto-1,3,4-diadiazol, Nikotinsäure, N-Benzyl-pyridiniumcarboxylat, N-Methyl-pyridiniumcarboxylat, Imidazol/Epichlorhydrin-Reaktionsprodukte, Alanin, Triethanolamin, Natriumpropargylsulfonat, 1-(3-Sulfopropyl)pyridiniumbetain, Aldehyde wie Veratraldehyd, Anisaldehyd, Vanilin oder Kombinationen davon enthält.

5. Galvanisierungsbad nach einem der vorhergehenden Ansprüche,
**dadurch gekennzeichnet, dass** das Galvanisierungsbad eine Temperatur von 15 °C bis 45 °C, vorzugsweise 20 °C bis 30 °C, aufweist.

6. Verfahren zum Abscheiden einer Zink-Eisen-Legierung auf einer Einrichtung,
**dadurch gekennzeichnet, dass** das Galvanisierungsbad nach einem der Ansprüche 1 bis 5 verwendet wird und Galvanisieren bei einer Stromdichte von 0,01 bis 20 A/dm², vorzugsweise 1 bis 3 A/dm², bei einer Temperatur des Galvanisierungsbades von 15 °C bis 45 °C, vorzugsweise 20 °C bis 30 °C, durchgeführt wird.

7. Gegenstand, der eine antikorrosive Schicht aus einer Zink-Eisen-Legierung aufweist, wobei die Schicht einen Eisengehalt von 7 bis weniger als 28 Gew.-% aufweist und das Zink-Eisen mindestens zwei kristalline Strukturen enthält, die aus der kubischen, der monoklinen und der hexagonalen Kristallstruktur von Zn/Fe ausgewählt sind.

8. Gegenstand nach Anspruch 7,
**dadurch gekennzeichnet, dass** die kristallinen Strukturen aus den Phasen ξ, δ1, η, Γ1 und Γ und Kombinationen davon ausgewählt sind.

9. Gegenstand nach Anspruch 7 oder 8,
**dadurch gekennzeichnet, dass** die Schicht eine Dicke von 0,5 bis 50 µm, vorzugsweise 3 to 20 µm aufweist.

10. Gegenstand nach einem der Ansprüche 7 bis 9,
**dadurch gekennzeichnet, dass** die Schicht einen Eisenanteil von mehr als 20 Gew.-%, vorzugsweise 21 bis 28 Gew.-%, aufweist.

11. Gegenstand nach einem der Ansprüche 7 bis 9,
**dadurch gekennzeichnet, dass** die Schicht einen Eisenanteil von weniger als 12 Gew.-%, vorzugsweise 7 bis 12 Gew.-%, aufweist.

12. Gegenstand nach einem der Ansprüche 7 bis 11, herstellbar durch das Verfahren von Anspruch 6.

13. Verwendung des Galvanisierungsbades nach einem der Ansprüche 1 bis 6 zum Schutz von Stahlteilen vor Korrosion.

## Revendications

1. Bain de galvanoplastie pour un alliage Zinc-Fer à un pH alcalin, comprenant
a) de 4 à 20 g/L d'ions zinc,
b) de 1 à 10 g/L d'ion fer,
c) de 20 à 150 g/L d'hydroxyde de sodium et/ou d'hydroxyde de potassium,
d) de 0,02 à 1 g/L de polymère d'ammonium quaternaire représenté par la formule générale I; 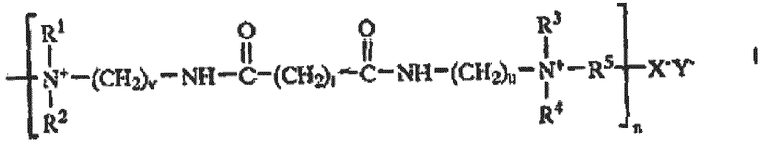 dans laquelle
R¹, R², R³, R⁴ peuvent être les mêmes ou être différent et incluent :-CH₃, -CH₂CH₃, -CH(CH₃)₂, -CH₂CH₂OH ; R⁵ est -CH₂CH₂-, -CH₂CH₂CH₂-,-CH₂CH₂CH₂CH₂-, -CH₂CHOHCH₂- ou -CH₂CH₂OHCH₂CH₂- ;
X et Y peuvent être les mêmes anions ou des anions différents et inclure : le chlore, le brome et l'iode ; dans lesquels u, v et t peuvent être les mêmes ou être différents et peuvent varier de 1 à 7
ou le polymère polyamine cationique est le Poly[bis(2-chloroéthyl)éther-alt-1,3-bis[3-(diméthylamino)propyl]urée]quaternisé
et
e) au moins un agent complexant sélectionné dans le groupe consistuté les amines, les polyols ou leurs mélanges,
dans lequel les acides carboxyliques ou hydroxycarboxyliques sont évités dans le bain de galvanoplastie.

2. Bain de galvanoplastie selon la revendication précédente, **caractérisé en ce que** la concentration en ion fer est de 1 à 5 g/L et/ou la concentration en ion zinc est de 6 à 10 g/L dans le bain de galvanoplastie.

3. Bain de galvanoplastie selon l'une des revendications précédentes, **caractérisé en ce que** la concentration d'hydroxyde de sodium est de 30 à 120 g/L dans le bain de galvanoplastie.

4. Bain de galvanoplastie selon l'une des revendications précédentes, **caractérisé en ce que** le bain de galvanoplastie comprend en plus des alcools polyvinyliques, 1,4 butynediol, 2,5-dimercapto-1,3,4 thiadiazole disodique, acide nicotinique, N-benzyl-pyridiniumcarboxylate, N-méthyl-pyridiniumcarboxylate, produits de réaction imidazole/épichlorhydrine, alanine, triéthanolamine, propargylsulfonate de sodium, 1-(3-sulfopropyl)pyridinium bétaïne, aldéhydes comme le vératraldéhyde, l'ani-saldéhyde, la vaniline, ou des combinaisons de ceux-ci.

5. Bain de galvanoplastie selon l'une des revendications précédentes, **caractérisé en ce que** le bain de galvanoplastie a une température de 15°C à 45°C, préférentiellement de 20°C à 30°C.

6. Procédé pour le dépôt d'un alliage Zinc-Fer sur un dispositif **caractérisé en ce que** le bain de galvanoplastie utilise est le bain selon l'une des revendications 1 à 5 et que l'électro dépôt est réalisé à une densité de courant entre 0,01 et 20 A/dm², préférentiellement entre 1 et 3 A/dm² à une température du bain de galvanoplastie de 15°C à 45°C, préférentiellement de 20°C à 30°C.

7. Dispositif comprenant une couche anticorrosion d'un alliage Zinc-Fer dans laquelle la couche a une teneur en fer de 7 à moins de 27% en poids et le Zinc-Fer comprend au moins deux structures cristallines sélectionné parmi les structures cristallines cubiques, monocliniques et hexagonales du Zn/Fe.

8. Dispositif selon la revendication 7, **caractérisé en ce que** la structure cristalline est sélectionnée à partir des phases ξ, δ1, η, Γ1, Γ et des combinaisons de ceux-ci.

9. Dispositif selon l'une des revendications 7 ou 8, **caractérisé en ce que** la couche a une épaisseur entre 0,5 et 50 µm, préférentiellement 3 et 20 µm.

10. Dispositif selon l'une des revendications 7 à 9, **caractérisé en ce que** la couche a une teneur en fer au-dessus de 20% en poids, préférentiellement entre 21 et 28% en poids.

11. Dispositif selon l'une des revendications 7 à 9, **caractérisé en ce que** la couche a une teneur en fer en dessous de 12% en poids, préférentiellement entre 7 et 12% en poids.

12. Dispositif selon l'une des revendications 7 à 11, **caractérisé en ce qu'**il est produit selon le procédé de la revendication 6.

13. Utilisation du bain de galvanoplastie selon l'une des revendications 1 à 6 pour la protection des pièces en acier contre la corrosion.
